# EUROPEAN PATENT SPECIFICATION

(11) **EP 0 445 932 B1**
(45) Date of publication and mention of the grant of the patent: **09.10.1996**
(21) Application number: 91301307.4
(22) Date of filing: 19.02.1991
(51) Int. Cl.: H04N 5/445

(54) **Video apparatus**
Videogerät
Appareil vidéo

(30) Priority: 06.03.1990 JP 52801/90
(43) Date of publication of application: 11.09.1991
(73) Proprietor: SONY CORPORATION, Tokyo 141 (JP)
(72) Inventor: Okura, Yukiko, Patents Division, Shinagawa-ku Tokyo 141 (JP); Komiya, Yoshinori, Patents Division, Shinagawa-ku Tokyo 141 (JP)
(74) Representative: Cotter, Ivan John

(56) References cited:
- DE-A- 3 028 223
- US-A- 3 335 315
- US-A- 4 821 102
- Benson, Television Engineering Handbook, McGraw-Hill, New York, 1986, Section 19.2, pages 19.9 - 19.20

## Description

The present invention relates to video apparatus having a character display function and to a method of displaying characters on a display means of a video apparatus.

In a known video apparatus, character signals generated from a character generator are added to image signals and the characters are displayed on a screen, whereby a display of the apparatus' function, log, operation content or the like can be expressed.

However, the displayed character expression in the video apparatus of the prior art is fixed. Therefore the display is not rich in power of expression, and a problem exists in that a viewer frequently cannot understand what a displayed character means.

In another known video apparatus, the display position of a character on the screen is varied in sequence, whereby the character is expressed as if it were in motion. In this case, however, since one particular character is simply moved, its power of expression is also limited.

US Patent US-A- 4 821 102 discloses a video apparatus comprising: a character signal generator for generating character signals representing an operation or function of the apparatus; display means for displaying an output video signal; a display signal processor for producing said output video signal from said character signals and from an input video signal representing an image such that characters corresponding to said character signals are displayed by the display means at a predetermined position to represent the function or operation of the apparatus; and control means for causing the character signal generator to generate a sequence of said character signals whereby the characters displayed at said predetermined position change in accordance with the sequence. The sequence of characters displayed at the predetermined position are alphanumeric characters and represent the count value (tape counter) of a tape running in a VTR. Thus, the characters displayed at the predetermined position are changed in accordance with the tape position.

According to one aspect of the invention there is provided a video apparatus comprising:
a character signal generator for generating character signals representing an operation or function of the apparatus;
display means for displaying an output video signal;
a display signal processor for producing said output video signal from said character signals and from an input video signal representing an image such that characters corresponding to said character signals are displayed by the display means at a predetermined position to represent the function or operation of the apparatus; and
control means for causing the character signal generator to generate a sequence of said character signals whereby the characters displayed at said predetermined position change in accordance with the sequence;
characterised in that:
means is provided for detecting which of a plurality of operations or functions of the apparatus is selected;
for each detected operation or function, the character signal generator is capable of generating a respective set of character signals representing a respective set of patterns;
said control means comprises a counter operative to produce a series of output signals separated by a predetermined interval of time corresponding to a plurality of fields of said output video signal, and an output selector reponsive to the detection means and the counter to control the operation of the character signal generator such that, upon receipt of each output signal of the counter, the character signal generator steps from producing one of the character signals of the respective set of character signals corresponding to the currently detected operation or function to producing another one of said set, as a consequence of which a sequence of the patterns of said set of patterns represented by said set of character signals is displayed at said predetermined position on said image at a frequency corresponding to said predetermined interval of time; and
said predetermined period of time corresponding to a plurality of fields of said output video signal is selected so that the sequence of patterns displayed at said predetermined position appears to be a moving pattern display.

According to another aspect of the invention, there is provided a method as defined in claim 5.

By virtue of such movement animation of the display of the detected type of operation or function, the intelligibility of the displayed function or operation can be improved.

The book Benson, Television Engineering Handbook, McGraw-Hill, New York, 1986, Section 19.2.3, describes the use of character generators in the context of animation.

Other features of the invention are defined in the appended claims.

A specific embodiment of the present invention will now be described by way of example with reference to the accompanying drawings, in which:
Figure 1 is a block diagram of image signal system of an embodiment of a video apparatus of the invention for display by animation;
Figure 2 is a block diagram of an example of character signal generating means used in the embodiment of Figure 1;
Figure 3 is a diagram of characters which may be generated by the character signal generating means of Figure 2;
Figure 4 is a flow chart illustrating operation of the embodiment;
Figure 5 shows examples of screens which may be produced by the video apparatus; and
Figure 6 is a diagram of other characters which may be generated by the character signal generating means of Figure 2.

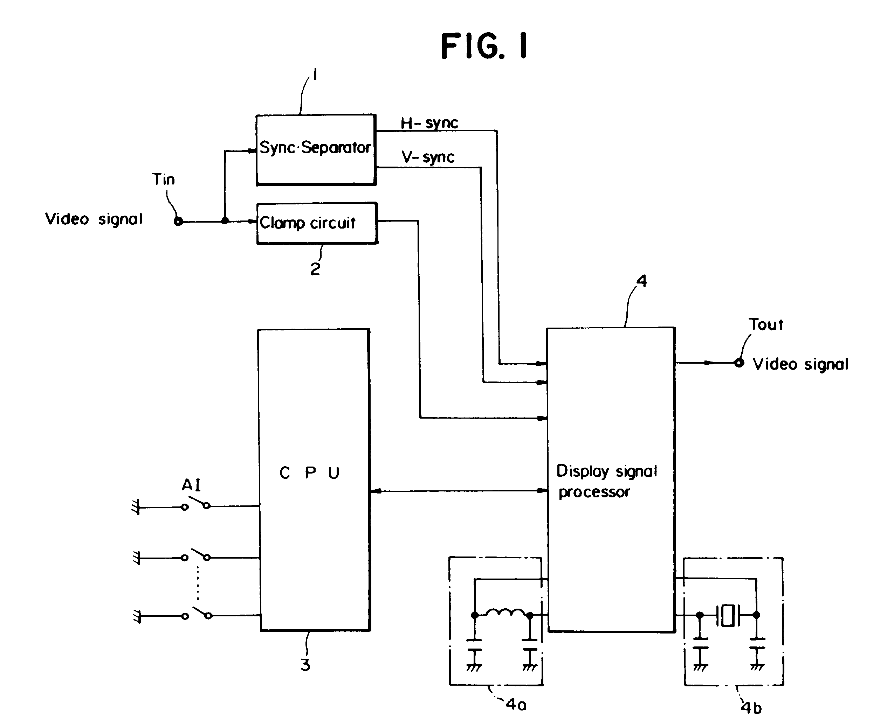

The video apparatus of Figure 1 may form part of various devices such as a monitor device, a TV receiver, a VTR, a BS tuner, a laser disk, a combined VTR and a monitor, or the like.

In Figure 1, the video apparatus comprises a synchronisation signal separator 1 which extracts synchronisation signals (V-sync, H-sync) from video signals inputted to an input terminal T_{IN} and outputs the synchronisation signals; a clamp circuit 2 which clamps the inputted video signals; and a display control microcomputer (CPU) 3 which controls operation during display processing and particularly can output a character signal by having character signal generating means as hereinafter described.

The video apparatus also comprises a display signal processor (display processing IC) 4 which processes the clamped video signal, the synchronisation signals and the character signal, and generates a resultant video signal at an output terminal TOUT for supply to a screen drive circuit. In addition, a display oscillator 4a and a synchronisation signal generating oscillator 4b are installed externally to the display signal processor 4.

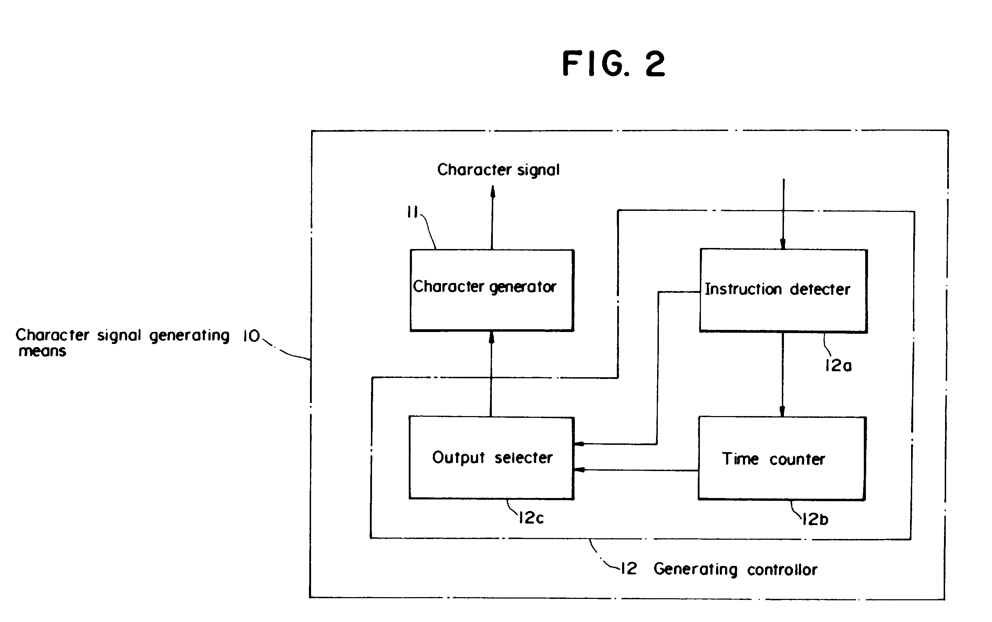

In the embodiment as above described, the CPU 3 is provided with a character signal generating means 10. As shown in Figure 2, the character signal generating means 10 is provided with an incorporated character generator 11, and a generating controller 12 constituted by an instruction detector 12a for determining the current function and operation mode of video apparatus and for outputting a character display command when the function and operation are to be displayed, a time counter 12b for counting a display time of each character as hereinafter described, and an output selector 12c for selecting characters outputted from the character generator 11. Each means in the generating controller 12 is formed by software.

A character signal outputted from the character signal generating means 10 is combined with an image signal in the display signal processor 4, and character is displayed on the screen of a CRT monitor which may be in one body or in a separate body. In the case where some particular function and operation are executed in the video apparatus, as a result of control of the generating controller 12 in the character signal generating means 10, character signals in one set corresponding to the function and operation are outputted in sequence one after another from the character generator 11, whereby the displayed characters can express the movement on the screen.

The control operation will be described by way of an example of the character display in a mode where an AI (Artificial Intelligence) function is executed in the video apparatus as follows. (Since the AI function itself does not have direct relation to the invention, its detailed description is omitted, but the functions of automatic luminance setting in response to the visual-aural environment, setting the optimum image contrast in response to the preceding frame, and other various functions have been proposed.)

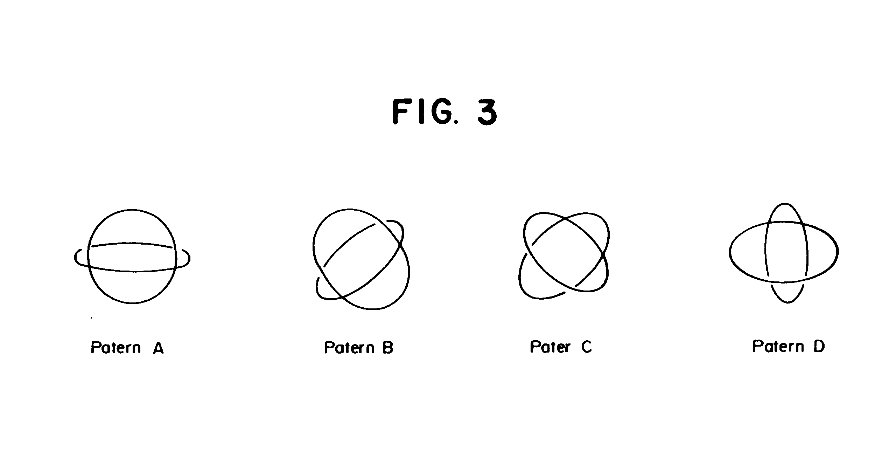

In the character generator 11, the characters to be displayed in the AI mode (for example, characters in four units (marks in a puzzle ring) as shown in Figure 3) are contained in one set. The characters are denoted as patterns A, B, C and D for convenience of the description.

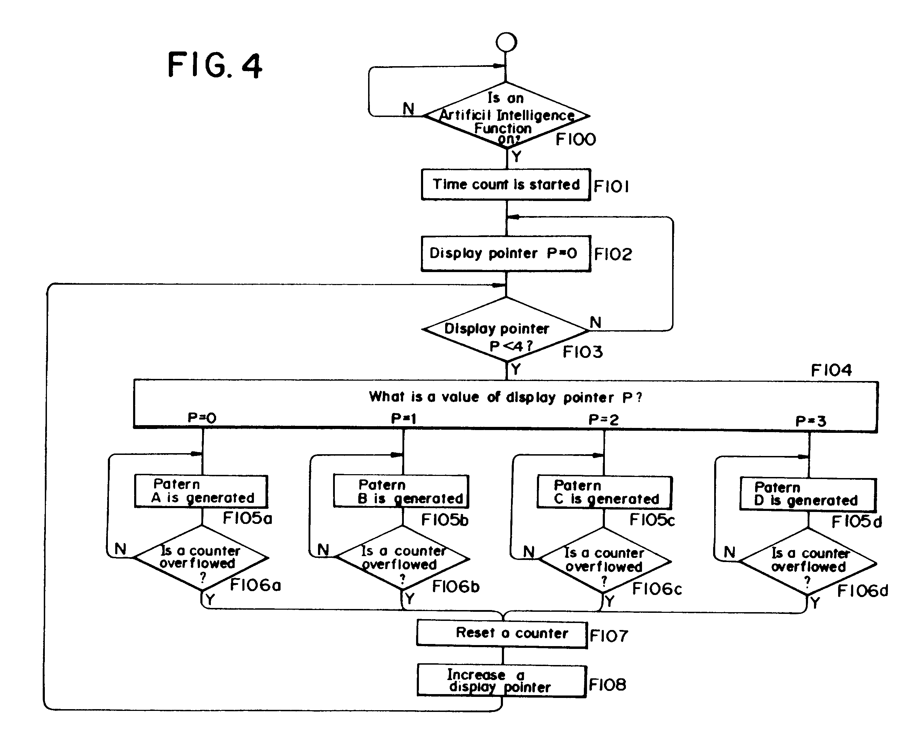

In the character signal generating means 10, when the AI function is rendered on, the operation shown in steps F100-F108 of the flow chart of Figure 4 is executed, and characters indicating the AI function mode are displayed on the screen.

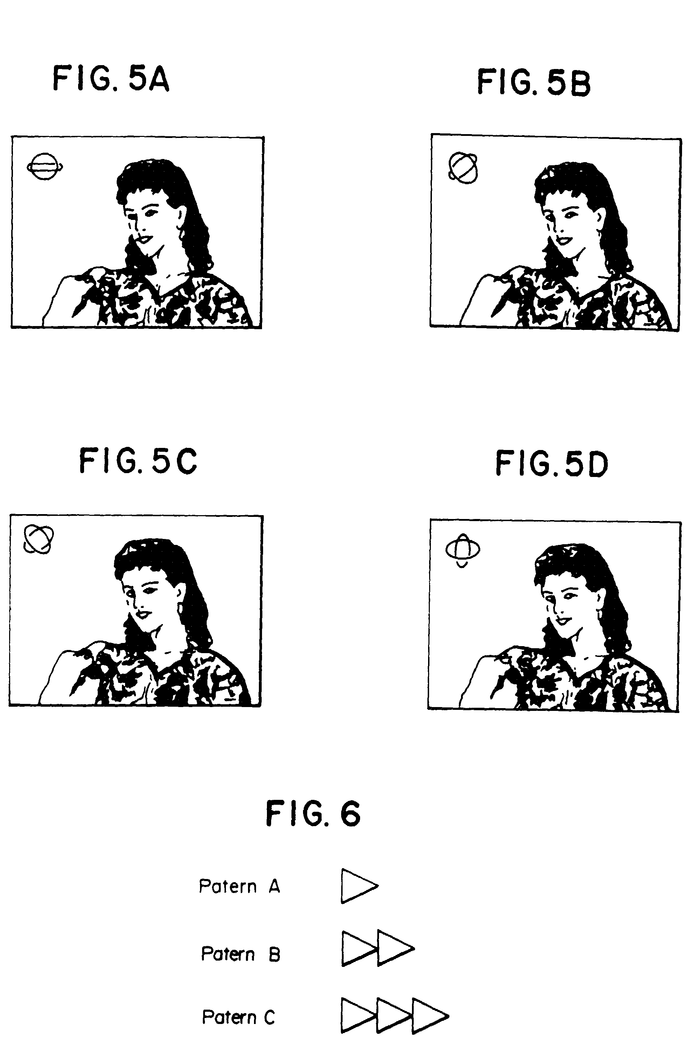

That is, if it is detected at step F100 in the instruction detector 12a that the AI function is on, the count is started in the time counter 12b (F101), and the output selector 12c first performs control so that the character generator 11 outputs the pattern A. That is, the display pointer is made P = 0 in the output select 12c (F102-F104), whereby the character generator 11 generates the pattern A among patterns A - D for the AI function and outputs the pattern A (F105a), and the pattern A is displayed together with the image on the screen as shown in Figure 5A.

During operation, counting is executed in the time counter 12b, and the output of the pattern A is continued until the count time attains to prescribed time (F106a, F105a). In this case, the count value of the time counter 12b is set to overflow after, for example, six fields (1/10 sec) of the image signal.

When the counter overflows, namely, at the stage that the pattern A is outputted, for example, for 1/10 sec, pattern B is then outputted and displayed as shown in Figure 5B. That is, after the counter overflows, the time counter 12b is reset and starts the count again (F107), and in the output selector 12c, the display pointer is incremented (F108). Consequently the display pointer becomes P = 1, and in accordance with the display pointer, the pattern B is selected in the character generator 11 (F104 - F105b).

The pattern B is outputted for prescribed time (eg 1/10 sec) in similar manner to the pattern A, and then pattern C and then pattern D are also selected and outputted respectively for 1/10 sec (F105c, F106c) (F105d, F106d), and displayed as shown in Figures 5C, 5D. Further after the pattern D, namely, when the display pointer becomes P = 4, the display pointer P is reset to 0 (F103 - F102), and the pattern A is outputted again. And so forth, each pattern is outputted in sequence.

In the character signal generating means 10, the operation is performed in this manner, whereby the character display state shown in Figures 5A - 5D is rapidly changed on the screen. For example, during the AI mode, characters indicating the AI mode (marks of a puzzle ring of Figure 3) are expressed as if they were rotating on the screen.

Although not shown in the flow chart of Figure 4, the character display (display by the patterns A-D) is performed, for example, for 5 - 10 seconds after the AI function commences, and then finishes.

The invention may be applied, of course, to characters displayed corresponding to operation not only of the AI function but also other functions and operations, and the patterns may be set so that features of the function and operation are expressed more effectively in respective cases. For example, when the video apparatus is a VTR device, patterns A - C as shown in Figure 6 are set corresponding to the fast feed operation and repeatedly displayed in sequence, whereby more effective expression can be made on the screen of the fast feed operation. In the case of display of the fast feed operation, the character display is not finished after about 5 - 10 seconds as in the AI display, but the display is preferably continued until the fast feed operation finishes. The character display time may be set in accordance with type of the function and operation.

Thus in the embodiment, movement is added to the character display by a plurality of characters (each pattern) corresponding to some function and operation, whereby the power of expression is increased and the viewer can understand and recognise the functions more deeply.

Also since the speed of the movement is determined by setting the unit display time of each pattern (for example, 1/10 sec exemplified in the AI display), the overflow time in the time counter 12a may be varied under control of the instruction detector 12a, whereby the speed of the movement of the character can be varied and the power of expression of each function can be improved.

Additionally, conventional characters can also, of course, be displayed statically.

As above described, in a video apparatus of the invention, since character signals of a plurality of patterns are outputted in sequence in the time series as characters to express some function and operation of the video apparatus, the character displayed on the screen can be expressed, whereby the power of expression of the character is increased and the viewer can easily understand various functions and operations of the video apparatus.

## Claims

1. A video apparatus comprising:
a character signal generator (11) for generating character signals representing an operation or function of the apparatus;
display means for displaying an output video signal;
a display signal processor (4) for producing said output video signal from said character signals and from an input video signal representing an image such that characters corresponding to said character signals are displayed by the display means at a predetermined position to represent the function or operation of the apparatus; and
control means (12b, 12c) for causing the character signal generator (11) to generate a sequence of said character signals whereby the characters displayed at said predetermined position change in accordance with the sequence;
characterised in that:
means (12a) is provided for detecting which of a plurality of operations or functions of the apparatus is selected;
for each detected operation or function, the character signal generator (11) is capable of generating a respective set of character signals representing a respective set of patterns (A-D, A-C);
said control means (12b, 12c) comprises a counter (12b) operative to produce a series of output signals separated by a predetermined interval of time corresponding to a plurality of fields of said output video signal, and an output selector (12c) reponsive to the detection means (12a) and the counter (12b) to control the operation of the character signal generator (11) such that, upon receipt of each output signal of the counter (12b), the character signal generator (11) steps from producing one of the character signals of the respective set of character signals corresponding to the currently detected operation or function to producing another one of said set, as a consequence of which a sequence of the patterns of said set of patterns (A-D, A-C) represented by said set of character signals is displayed at said predetermined position on said image at a frequency corresponding to said predetermined interval of time; and
said predetermined period of time corresponding to a plurality of fields of said output video signal is selected so that the sequence of patterns displayed at said predetermined position appears to be a moving pattern display.

2. A video apparatus according to claim 1, comprising:
a clamp circuit (2) for clamping said input video signal; and
a synchronisation signal separator (1) for separating synchronisation signals from the input video signal;
the display signal processor (4) being operative to produce said output video signal from an output signal of the synchronisation signal separator (1), an output signal of the clamp circuit (2), and the character signals.

3. A television receiver including a video apparatus as claimed in claim 2.

4. A video apparatus according to claim 2, wherein the whole of the video apparatus except the display means forms part of a video signal reproducing apparatus.

5. A method of displaying characters together with an image on a display means of a video apparatus, the method comprising the steps of:
generating (11) character signals representing an operation or function of the apparatus;
producing (4) an output video signal from said character signals and from an input video signal representing said image such that characters corresponding to said character signals are displayed by the display means at a predetermined position to represent the function or operation of the apparatus; and
controlling (12b, 12c) the character signal generation (11) so as to generate a sequence of said character signals whereby the characters displayed at said predetermined position change in accordance with the sequence;
characterised in that:
which of a plurality of operations or functions of the apparatus is selected is detected (12a);
for each detected operation or function, a respective set of character signals representing a respective set of patterns (A-D, A-C) is generated;
said controlling step (12b, 12c) comprises producing (12b) a series of output signals separated by a predetermined interval of time corresponding to a plurality of fields of said output video signal, and controlling (12c) the character signal generation (11) in response to said detection (12a) and said output signals such that, upon receipt of each said output signal, a step is made from producing one of the character signals of the respective set of character signals corresponding to the currently detected operation or function to producing another one of said set, as a consequence of which a sequence of the patterns of said set of patterns (A-D, A-C) represented by said set of character signals is displayed at said predetermined position on said image at a frequency corresponding to said predetermined interval of time; and
said predetermined period of time corresponding to a plurality of fields of said output video signal is selected so that the sequence of patterns displayed at said predetermined position appears to be a moving pattern display.

## Patentansprüche

1. Videogerät, das aufweist:
einen Zeichensignalgenerator (11) zum Erzeugen von Zeichensignalen, die eine Betriebsart oder eine Funktion des Geräts darstellen;
eine Abbildungseinrichtung zur Abbildung eines Ausgangsvideosignals;
einen Abbildungssignalprozessor (4) zur Erzeugung des Ausgangsvideosignals aus den Zeichensignalen und aus einem Eingangsvideosignal, welches ein Bild darstellt, so daß Zeichen, die den Zeichensignalen entsprechen, durch die Abbildungseinrichtung an einer vorgegebenen Position abgebildet werden, um die Funktion oder die Betriebsart des Geräts darzustellen; und
eine Steuereinrichtung (12b, 12c) zur Veranlassung des Zeichensignalgenerators (11), eine Folge der Zeichensignale zu erzeugen, wodurch sich die Zeichen, die an der vorgegebenen Position abgebildet werden, sich in Abhängigkeit von der Folge ändern;
**dadurch gekennzeichnet**, daß
eine Einrichtung (12a) vorgesehen ist, um zu ermitteln, welche von mehreren Betriebsarten oder Funktionen des Geräts ausgewählt ist;
der Zeichensignalgenerator (11) in der Lage ist, für jede ermittelte Betriebsart oder Funktion einen entsprechenden Satz von Zeichensignalen, die einen entsprechenden Satz von Motiven (A-D, A-C) darstellen, zu erzeugen;
die Steuereinrichtung (12b, 12c) einen Zähler (12b) besitzt, der eine Reihe von Ausgangssignalen, die um ein vorgegebenes Zeitintervall entsprechend mehrerer Teilbilder des Ausgangsvideosignals getrennt sind, erzeugen kann, und eine Ausgabeauswahleinrichtung (12c), die auf die Ermittlungseinrichtung (12a) und den Zähler (12b) reagiert, um den Betrieb des Zeichensignalgenerators (11) derart zu steuern, daß bei Erhalt eines jeden Ausgangssignals des Zählers (12b) der Zeichensignalgenerator (11) von der Erzeugung eines der Zeichensignale des entsprechenden Satzes der Zeichensignale entsprechend der laufend ermittelten Betriebsart oder Funktion zur Erzeugung eines anderen des Satzes schreitet, wobei als Folge davon eine Folge von Motiven des Satzes der Motive (A-D, A-C), die durch den Satz der Zeichensignale dargestellt werden, an der vorgegebenen Position auf dem Bild mit einer Frequenz entsprechend dem vorgegebenen Zeitintervall abgebildet werden; und
die vorgegebene Zeitdauer entsprechend der mehreren Teilbilder des Ausgangsvideosignals so ausgewählt wird, daß die Folge der Motive, die an der vorgegebenen Position abgebildet werden, so erscheinen, als ob sie eine sich bewegende Motivabbildung wären.

2. Videogerät nach Anspruch 1, welches aufweist:
eine Klemmschaltung (2) zum Klemmen des Eingangsvideosignals; und
eine Synchronisationssignal-Trenneinrichtung (1) zum Trennen der Synchronisationssignale aus dem Eingangsvideosignal;
wobei der Anzeigesignalprozessor (4) das Ausgangsvideosignal aus einem Ausgangssignal der Synchronisationssignal-Trenneinrichtung (1), aus einem Ausgangssignal der Klemmschaltung (2) und aus den Zeichensignalen erzeugt.

3. Fernsehempfänger, der das Videogerät, wie es im Anspruch 2 beansprucht wurde, besitzt.

4. Videogerät nach Anspruch 2, wobei das komplette Videogerät mit der Ausnahme der Anzeigeeinrichtung Teil eines Videosignal-Wiedergabegeräts bildet.

5. Verfahren zur Abbildung von Zeichen zusammen mit einem Bild auf einer Anzeigeeinrichtung eines Videogeräts, wobei das Verfahren folgende Schritte aufweist:
Erzeugung (11) von Zeichensignalen, die eine Betriebsart oder eine Funktion des Geräts darstellen;
Erzeugen (4) eines Ausgangsvideosignals aus den Zeichensignalen und aus dem Eingangsvideosignal, das das Bild darstellt, so daß Zeichen, die den Zeichensignalen entsprechen, durch die Abbildungseinrichtung an einer vorgegebenen Position abgebildet werden, um die Funktion oder die Betriebsart des Gerätes darzustellen; und
Steuern (12b, 12c) der Zeichensignalerzeugung (11) so, um eine Folge dieser Zeichensignale zu erzeugen, wodurch die Zeichen, die an der vorgegebenen Position abgebildet werden, sich in Abhängigkeit von der Folge ändern;
**dadurch gekennzeichnet**, daß
ermittelt (12a) wird, welche von mehreren Betriebsarten oder Funktionen des Geräts ausgewählt ist;
für jede ermittelte Betriebsart oder Funktion ein entsprechender Satz von Zeichensignalen, die einen entsprechenden Satz von Motiven (A-D, A-C) repräsentieren, erzeugt wird;
der Steuerungsschritt (12b, 12c) die Erzeugung (12b) einer Reihe von Ausgangssignalen, die um ein vorgegebenes Zeitintervall entsprechend von mehreren Teilbildern des Videosignals getrennt sind, umfaßt, und das Steuern (12c) der Zeichensignalerzeugung (11) in Abhängigkeit von dieser Ermittlung (12a) und dieser Ausgangssignale, so daß bei einem Empfang eines jeden Ausgangssignals ein Schritt von der Erzeugung eines der Zeichensignale des entsprechenden Satzes der Zeichensignale entsprechend der laufend ermittelten Betriebsart oder Funktion zur Erzeugung eines anderen dieses Satzes durchgeführt wird, wobei als Folge davon eine Folge von Motiven des Satzes der Motive (A-D, A-C), die durch den entsprechenden Satz der Zeichensignale repräsentiert werden, an der vorgegebenen Position auf dem Bild mit einer Frequenz entsprechend des vorgegebenen Zeitintervalls abgebildet werden; und
die vorgegebene Zeitperiode entsprechend von mehreren Teilbildern des Ausgangsvideosignals ausgewählt wird, so daß die Folge der Motive, welche an der vorgegebenen Position abgebildet werden, so erscheint, als ob sie eine sich bewegende Motivabbildung wären.

## Revendications

1. Appareil vidéo comprenant :
un générateur de signal de caractère (11) pour générer des signaux de caractère représentant un fonctionnement ou une fonction de l'appareil ;
un moyen d'affichage pour afficher un signal vidéo de sortie ;
un processeur de signal d'affichage (4) pour produire ledit signal vidéo de sortie à partir desdits signaux de caractère et à partir d'un signal vidéo d'entrée représentant une image de sorte que des caractères correspondant audits signaux de caractère sont affichés par le moyen d'affichage à une position prédéterminée pour représenter la fonction ou le fonctionnement de l'appareil ; et
un moyen de commande (12b, 12c) pour provoquer la génération par ledit générateur de signal de caractère (11) d'une séquence desdits signaux de caractère de sorte que les caractères affichés sur ladite position prédéterminée varient selon la séquence ;
caractérisé en ce que :
un moyen (12a) est fourni pour détecter lequel d'une pluralité de fonctionnements ou de fonctions de l'appareil est sélectionnée ;
pour chaque fonctionnement ou fonction détecté, le générateur de signal de caractère (11) est capable de générer un jeu respectif de signaux de caractère représentant un jeu respectif de modèles (A à D, A à C) ;
ledit moyen de commande (12b, 12c) comprend un compteur (12b) opérant pour produire une série de signaux de sortie séparés par un intervalle de temps prédéterminé correspondant à une pluralité de trames dudit signal vidéo de sortie, et un sélecteur de sortie (12c) sensible au moyen de détection (12a) et au compteur (12b) pour commander le fonctionnement du générateur de signal de caractère (11) de sorte que, lors de la réception de chaque signal de sortie du compteur (12b), le générateur de signal de caractère (11) cesse de produire un des signaux de caractère du jeu respectif de signaux de caractère correspondant au fonctionnement ou à la fonction détecté actuellement pour produire un autre dit jeu, en conséquence de quoi une séquence de modèles dudit jeu de modèles (A à D, A à C) représentée par ledit jeu de signaux de caractère est affichée à ladite position prédéterminée sur ladite image à une fréquence correspondant audit intervalle de temps prédéterminé ; et
ladite période de temps prédéterminée correspondant à une pluralité de trames dudit signal vidéo de sortie est sélectionnée pour que la séquence de modèles affichée sur ladite position prédéterminée paraisse être un affichage de modèle en mouvement.

2. Appareil vidéo selon la revendication 1, comprenant :
un circuit de fixation de niveau (2) pour fixer le niveau dudit signal vidéo d'entrée ; et
un séparateur de signal de synchronisation (1) pour séparer des signaux de synchronisation du signal vidéo d'entrée ;
le processeur de signal d'affichage (4) étant opérant pour produire ledit signal vidéo de sortie à partir d'un signal de sortie du séparateur de signal de synchronisation (1), d'un signal de sortie du circuit de fixation de niveau (2) et des signaux de caractère.

3. Récepteur de télévision comprenant un appareil vidéo selon la revendication 2.

4. Appareil vidéo selon la revendication 2, dans lequel la totalité de l'appareil vidéo excepté le moyen d'affichage forme une partie d'un appareil de reproduction de signal vidéo.

5. Procédé d'affichage de caractères ainsi qu'une image sur un moyen d'affichage d'un appareil vidéo, ledit procédé comprenant les étapes de :
génération (11) des signaux de caractère représentant un fonctionnement ou une fonction de l'appareil ;
production (4) d'un signal vidéo de sortie desdits signaux de caractère et à partir d'un signal vidéo d'entrée représentant ladite image de telle sorte que des caractères correspondant auxdits signaux de caractère sont affichés par ledit moyen d'affichage à une position prédéterminée pour représenter la fonction ou le fonctionnement de l'appareil ; et
commande (12b, 12c) de la génération de signal de caractère (11) afin de générer une séquence desdits signaux de caractère de sorte que les caractères affichés sur ladite position prédéterminée varient selon la séquence ;
caractérisé en ce que :
on détecte (12a) lequel d'une pluralité de fonctionnements ou de fonctions de l'appareil est sélectionné ;
pour chaque fonctionnement ou fonction détecté, un jeu respectif de signaux de caractère représentant un jeu respectif de modèles (A à D, A à C) est généré ;
ladite étape de commande (12b, 12c) comprend la production (12b) d'une série de signaux de sortie séparée par un intervalle de temps prédéterminé correspondant à une pluralité de trames dudit signal vidéo de sortie, et commande (12c) la génération de signal de caractère (11) en réponse à ladite détection (12a) desdits signaux de sortie, pour que, lors de la réception de chaque dit signal de sortie, une étape soit effectuée pour produire un des signaux de caractère du jeu respectif des signaux de caractère correspondant au fonctionnement ou la fonction détecté actuellement pour produire un autre dit jeu, en conséquence de quoi une séquence de modèles dudit jeu de modèles (A à D, A à C) représentée par ledit jeu de signaux de caractère est affichée à ladite position prédéterminée sur ladite image à une fréquence correspondant audit intervalle de temps prédéterminé ; et
ladite période de temps prédéterminée correspondant à une pluralité de trames dudit signal vidéo de sortie est sélectionnée pour que la séquence de modèles affichée sur ladite position prédéterminée paraisse être un affichage de modèle en mouvement.
